# EUROPEAN PATENT APPLICATION

(11) **EP 3 076 349 A1**
(43) Date of publication of application: **05.10.2016**
(21) Application number: 16162012.5
(22) Date of filing: 23.03.2016
(51) Int. Cl.: G06Q 10/06

(54) **MANAGEMENT SYSTEM AND MANAGEMENT METHOD**

(30) Priority: 31.03.2015 JP 2015074248
(71) Applicant: Mitsubishi Heavy Industries, Ltd., Tokyo 108-8215 (JP)
(72) Inventor: Iio, Tsuyoshi, Tokyo, 108-8215 (JP); Yokohama, Koji, Tokyo, 108-8215 (JP)
(74) Representative: Henkel, Breuer & Partner

(57) **Abstract**

A management system includes a management server and a heat pump device. The management server includes an operation command information storage unit that receives and stores a command file from a manager terminal and an operation command information transmission unit that transmits the command file on the basis of a request for the command file. The heat pump includes an operation control unit that performs operation control of a device on the basis of the command file received from the management server.

## Description

### BACKGROUND OF THE INVENTION

### Field of the Invention

The present invention relates to a management system and a management method.

### Description of Related Art

In some cases, a commodity which is a target for management is delivered to a customer, and then a sales agency performs a management operation on the commodity. For example, in a case where the commodity is a water heater and it is difficult to operate the water heater, or a case where a sales agency sells a large number of water heaters and takes charge of the management thereof, a person in charge who is a sales agency may perform management operations remotely. Meanwhile, an associated technique is disclosed in Patent Literature 1.

### Prior Art Documents

Patent Literature 1: PCT International Publication No. WO 2013/118884.

In the above-mentioned technique disclosed in the Patent Literature 1, a control command for a management operation has to be transmitted to a device (main board) having an air conditioner which is a target for management connected thereto. In this case, the transmitting side of the control command is required to always ascertain address information on a network of the air conditioner or a device that relays the control command to the air conditioner.

### SUMMARY OF THE INVENTION

The present invention provides a management system and a management method which are capable of solving the above-mentioned problem.

According to a first aspect of the present invention, there is provided a management system including a management device and a managed device. The management device includes an operation command information storage unit that receives and stores operation command information from a manager terminal, and an operation command information transmission unit that transmits the operation command information on the basis of a request for the operation command information. The managed device, which is an objected device of the management, performs operation control of the device on the basis of the operation command information received from the management device.

The management system may further include a relay device that transmits the request to the management device; and an operation command relay unit that receives the operation command information from the management device and transmits the received information to the managed device.

The relay device may transmit the request to the management device periodically or at a predetermined time.

The operation command information transmission unit of the management device may transmit operation command information having a highest degree of priority among items of the operation command information for the managed device.

A magnitude of the degree of priority may be determined on the basis of a registration time of the operation command information.

A magnitude of the degree of priority may be determined on the basis of a manager having the operation command information registered therewith.

The managed device may be constituted by a plurality of the managed devices, the operation command information may be operation command information of each of the plurality of managed devices, and the operation control unit of each of the plurality of managed devices which are targets for management may acquire an operation command corresponding to the device on the basis of the operation command information and performs operation control.

According to a second aspect of the present invention, there is provided a management method in a management system provided with a management device and a managed device, the method including: causing an operation command information storage unit of the management device to receive and store operation command information from a manager terminal; causing an operation command information transmission unit of the management device to transmit the operation command information on the basis of a request for the operation command information; and causing an operation control unit of the managed device to perform operation control of the device on the basis of the operation command information received from the management device.

According to the management system and the management method described above, it is not necessary for a manager device to have a direct access to a managed device, and thus it not necessary to ascertain an address on a network of the managed device at all times. Therefore, the system can be constructed at a low cost, and the versatility of the system increases. In addition, the change of design of the system is facilitated.

### BRIEF DESCRIPTION OF THE DRAWINGS

FIG. 1 is a block diagram illustrating a schematic configuration of a management system according to a first embodiment of the present invention.
FIG. 2 is a functional block diagram based on an operation of the management system according to the first embodiment of the present invention.
FIG. 3 is a diagram illustrating an example of an operation screen in the management system according to the first embodiment of the present invention.
FIG. 4 is a flow diagram illustrating an operation of a manager terminal in the management system according to the first embodiment of the present invention.
FIG. 5 is a flow diagram illustrating an operation of a management server in the management system according to the first embodiment of the present invention.
FIG. 6 is a flow diagram illustrating an operation of a gateway of a heat pump device in the management system according to the first embodiment of the present invention.
FIG. 7 is a block diagram illustrating a schematic configuration of a management system according to a second embodiment of the present invention.
FIG. 8 is a flow diagram illustrating a process when a registration time is set to the degree of priority in the management system according to the second embodiment of the present invention.
FIG. 9 is a flow diagram illustrating a process when a manager is set to the degree of priority in the management system according to the second embodiment of the present invention.
FIG. 10 is a block diagram illustrating a schematic configuration of a management system according to a third embodiment of the present invention.
FIG. 11 is a diagram illustrating an example of an operation screen in the management system according to the third embodiment of the present invention.

### DETAILED DESCRIPTION OF THE INVENTION

Hereinafter, embodiments of the present invention will be described with reference to the accompanying drawings.

### <First Embodiment>

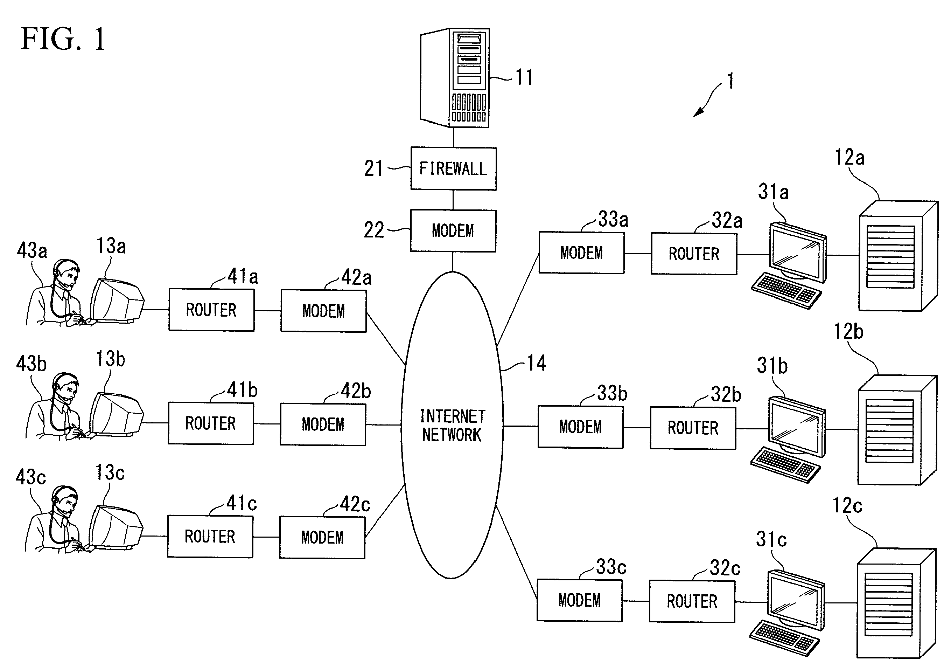

FIG. 1 is a block diagram illustrating a schematic configuration of a management system 1 according to a first embodiment of the present invention. As shown in FIG. 1, the management system 1 according to the first embodiment of the present invention includes a management server (management device) 11, heat pump devices (managed devices, which are targets for management) 12a to 12c, and manager terminals 13a to 13c.

Meanwhile, the number of heat pump devices included in the management system 1 may be one or more without being limited to three shown in FIG. 1. In addition, the number of manager terminals included in the management system 1 may be one or more without being limited to three shown in FIG. 1. In the first embodiment, the number of manager terminals is the same as the number of heat pump devices.

The management server 11 is a server that manages the heat pump devices 12a to 12c. The management server 11 is capable of being connected to an Internet network 14 through a firewall 21 and a modem 22.

The heat pump devices 12a to 12c are, for example, water heaters using a heat pump. The heat pump devices 12a, 12b, and 12c are capable of being connected to the Internet network 14 through gateways (relay devices) 31a, 31 b, and 31 c, routers 32a, 32b, and 32c, and modems 33a, 33b, and 33c, respectively.

Meanwhile, the number of gateways included in the management system 1 may be one or more without being limited to three shown in FIG. 1. As shown in FIG. 1, in the configuration in which a gateway is included for each heat pump device, the number of gateways may be the same with heat pump devices.

In addition, the number of routers included in the management system 1 may be one or more without being limited to three shown in FIG. 1. As shown in FIG. 1, in the configuration in which a router is included for each heat pump device and manager terminal, the number of routers may be the sum of the number of heat pump devices and the number of manager terminals.

In addition, the number of modems included in the management system 1 may be one or more without being limited to three shown in FIG. 1. As shown in FIG. 1, in the configuration in which a modem is included for each router, and a modem is included for use in a management server, the number of modems may be the sum of the number of routers and the number of management servers.

The manager terminals 13a to 13c are terminals that remotely operate the heat pump devices 12a to 12c. The manager terminals 13a, 13b, and 13c are capable of being connected to the Internet network 14 through routers 41 a, 41 b, and 41c, and modems 42a, 42b, and 42c, respectively. The manager terminals 13a to 13c to be used may include any devices such as a personal computer (PC) and a portable terminal as long as these terminals are capable of being connected to the Internet network 14. In addition, each of the manager terminals 13a to 13c may be installed on a different place such as a user's house, an agent, or a maintenance company. In addition, it is considered that operators 43a to 43c corresponding to managers of the manager terminals 13a to 13c include users of the heat pump devices 12a to 12c, operators of agents of the devices, operators of maintenance companies of the heat pump devices 12a to 12c, or the like.

When the heat pump devices 12a to 12c are remotely operated, the operators 43a to 43c give operation inputs to the manager terminals 13a to 13c. When the operation inputs are given to the manager terminals 13a to 13c, command files (operation command information) for operating the heat pump devices 12a to 12c are generated in the manager terminals 13a to 13c on the basis of these operation inputs. These command files are transmitted to the management server 11 through the Internet network 14. When the management server 11 receives the command files from the manager terminals 13a to 13c, the management server stores these command files. Meanwhile, the number of operators may be one or more without being particularly limited.

Each of the gateways 31 a to 31 c of the heat pump devices 12a to 12c has access to the management server 11 for each predetermined time or at a predetermined time (or periodically), and acquires a command file which is used for operating the device to the management server 11. Each of the gateways 31 a to 31 c sets an operation of each of the heat pump devices 12a to 12c on the basis of the acquired command file.

In this manner, the management system 1 according to the first embodiment of the present invention generates the command files in the manager terminals 13a to 13c on the basis of the operation inputs, and transmits these command files to the management server 11. The management server 11 stores these command files. Each of the gateways 31 a to 31c of the heat pump devices 12a to 12c has access to the management server 11 for each predetermined time or at a predetermined time. The gateways 31 a to 31 c download the command files which are used for operating the device, and control operations of the heat pump devices 12a to 12c on the basis of these command files. In this case, the manager terminals 13a to 13c are not required to have a direct access to the heat pump devices 12a to 12c (or gateways 31 a to 31 c), and may be capable of being connected only to the management server 11. In addition, the management server 11 is also not required to have a direct access to the heat pump devices 12a to 12c (or gateways 31 a to 31 c), and the gateways 31 a to 31 c may be capable of being connected to the management server 11. Therefore, a dedicated line is not required for constructing the management system 1. In addition, only the management server 11 requires a static IP address (Internet Protocol address), and it is not necessary to allocate static IP addresses to the manager terminals 13a to 13c or the heat pump devices 12a to 12c (or gateways 31a to 31c). IP addresses for connecting the manager terminals 13a to 13c or the gateways 31a to 31c to the Internet network 14 may be appropriately acquired using, for example, a dynamic host configuration protocol (DHCP). In addition, a general-purpose PC or a portable terminal can be used as the manager terminals 13a to 13c or the gateways 31a to 31c. Therefore, the system can be constructed at a low cost, and the versatility of the system increases. In addition, the change of design of the system is facilitated. Since the allocation of a static IP address to the heat pump device is not required, it is possible to reduce a burden of a device purchaser. There is no complicated work for a device purchaser to have to acquire a static IP address for each device in order to continuously receive an after-sales service such as management during use after device purchase, and thus it is possible to reduce hesitation in an after-sales service contract of the device purchaser.

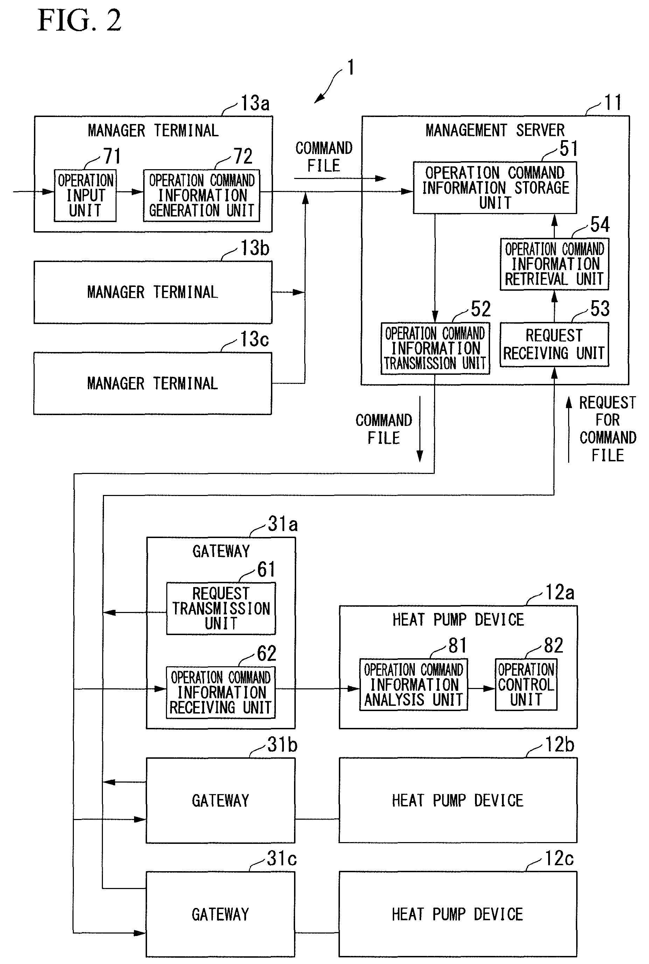

FIG. 2 is a functional block diagram based on an operation of the management system 1 according to the first embodiment of the present invention. The operation of the management system 1 according to the first embodiment of the present invention will be further described with reference to the functional block diagram of FIG. 2. Meanwhile, herein, the Internet network 14, the firewall 21, the modem 22, the routers 32a to 32c, the modems 33a to 33c, the routers 41a to 41c, and the modems 42a to 42c are omitted for the purpose of simplifying description.

As shown in FIG. 2, the management system 1 includes the management server 11, the heat pump devices 12a to 12c, and the manager terminals 13a to 13c. The gateways 31 a to 31 c are provided, as relays, between the management server 11 and the heat pump devices 12a to 12c. The gateways 31a to 31c can be realized by, for example, a PC.

The management server 11 includes an operation command information storage unit 51, an operation command information transmission unit 52, a request receiving unit 53, and an operation command information retrieval unit 54. The operation command information storage unit 51 stores the command files received from the manager terminals 13a to 13c. The operation command information transmission unit 52 transmits the command files which are used for operating the device, to the gateways 31 a to 31c of the heat pump devices 12a to 12c. The request receiving unit 53 receives a request for the command files from the gateways 31 a to 31 c. The operation command information retrieval unit 54 retrieves a desired command file which is used for operating the device, from the command files stored in the operation command information storage unit 51.

Each of the gateways 31a to 31c of the heat pump devices 12a to 12c includes a request transmission unit 61 and an operation command information receiving unit 62 (operation command relay unit). The request transmission unit 61 transmits a request for a command file for operating the device as a target device, to the management server 11. The operation command information receiving unit 62 receives the command file which is used for operating the device, from the management server 11.

Each of the heat pump devices 12a to 12c includes an operation command information analysis unit 81 and an operation control unit 82. The operation command information analysis unit 81 analyzes the received command file. The operation control unit 82 performs operation control of the device on the basis of information of the command file analyzed by the operation command information analysis unit 81.

Each of the manager terminals 13a to 13c includes an operation input unit 71 and an operation command information generation unit 72. The operation input unit 71 inputs operation information of the heat pump devices 12a to 12c on the basis of the operation screen. The operation command information generation unit 72 generates a command file on the basis of the input operation information.

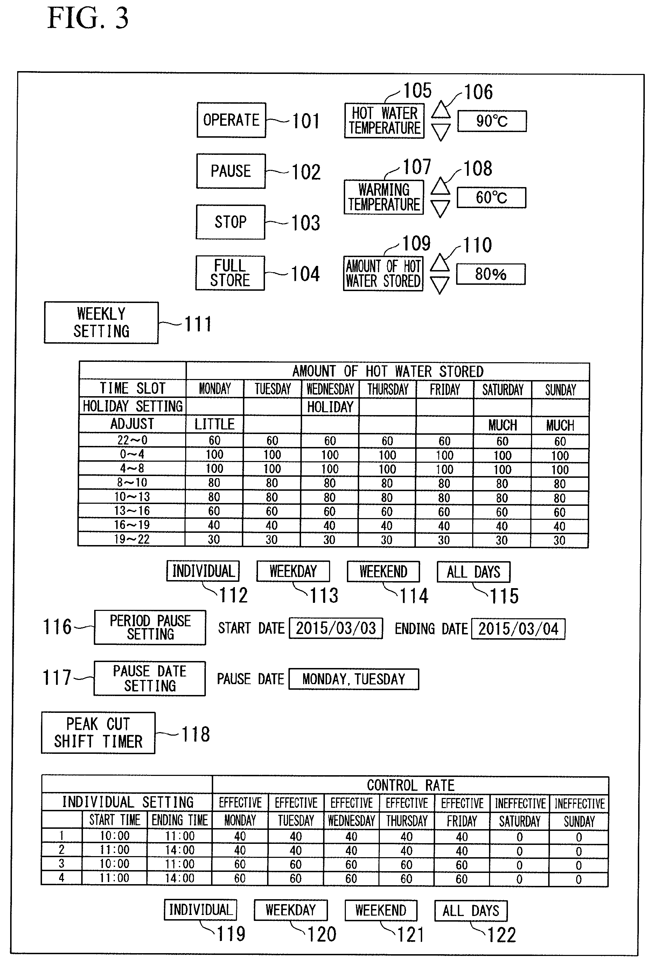

FIG. 3 is a diagram illustrating an example of an operation screen in the management system according to the first embodiment of the present invention. In FIG. 3, an operation button 101 is a button for performing a hot-water tank operation.

A pause button 102 is a button for causing the hot-water tank operation to pause. A stop button 103 is a button for stopping the hot-water tank operation. Meanwhile, in the pause button 102, even when the hot-water tank operation is caused to pause, a protection operation such as freeze proofing is performed. In the stop button 103, the hot-water tank operation is completely stopped. A full store button 104 is a button for setting an urgent operation in a case of full store.

A hot water temperature button 105 is a button for performing temperature setting of hot water. The setting temperature can be set using an up/down button 106. A warming temperature button 107 performs setting of the warming temperature of hot water. When the hot water temperature drops to equal to or less than the setting of the warming temperature, boiling is performed. The setting temperature can be set using an up/down button 108. A hot-water amount button 109 is a button for setting the amount of hot water stored in a tank. The amount of hot water stored can be set in percent using an up/down button 110.

A weekly setting button 111 is a button for setting the amount of hot water stored every week for each time slot.

For example, a beauty shop or the like is crowded with many customers in the daytime of the weekend, and has an increasing amount of hot water used. In this manner, the amount of hot water stored which is required every week is determined to some extent for each type of business. The weekly setting button 111 is a button for setting the amount of hot water stored, in accordance with the amount of hot water stored which is expected for each time slot every week. The setting of the amount of hot water stored every week can be set using an individual button 112, a weekday button 113, a weekend button 114, and an all days button 115.

A period pause setting button 116 is a button for setting a period in which a hot-water tank is caused to pause. For example, in a case where the hot-water tank operation is not performed for a certain period as in the time of the midsummer holidays, the period can be set using the period pause setting button 116. A pause date setting button 117 is a button for setting a date at which the hot-water tank operation is caused to pause. For example, in a beauty shop or the like, Monday or Tuesday is set to a holiday. In this manner, in a case where a holiday is determined, the hot-water tank operation during the holiday can be caused to pause using the pause date setting button 117.

A peak cut shift timer button 118 is a button for setting the suppression of power consumption in a time slot in which electric power demand increases. Particularly, in a case where an electric power contract is performed by a peak shift, the setting of the electric power can be set so that power consumption is suppressed by a contract plan. The setting of a peak cut shift timer can be set using an individual button 119, a weekday button 120, a weekend button 121, and an all days button 122.

The operation input unit 71 of each of the manager terminals 13a to 13c in FIG. 2 is given operation inputs through an input screen as shown in FIG. 3. The operation inputs are sent to the operation command information generation unit 72. The operation command information generation unit 72 generates a command file based on the input operation information.

The command file generated by the operation command information generation unit 72 of each of the manager terminals 13a to 13c is sent to the management server 11. The operation command information storage unit 51 of the management server 11 receives and stores the command file of each of the manager terminals 13a to 13c.

Each of the gateways 31 a to 31c of the heat pump devices 12a to 12c includes the request transmission unit 61. The request transmission unit 61 has access to the management server 11 at a predetermined time interval or at a predetermined time, and transmits a request for the command file which is used for operating the device. Meanwhile, the time interval or the time at which the request transmission unit 61 has access to the management server 11 may be appropriately set.

When the request receiving unit 53 of the management server 11 receives the request for the command file from the gateways 31a to 31 c, the operation command information retrieval unit 54 retrieves a command file corresponding to the device from the command files stored in the operation command information storage unit 51.

For example, a request for a command file which is used for operating the heat pump device 12a is transmitted from the gateway 31 a of the heat pump device 12a. When the request for the command file of the heat pump device 12a is received, the operation command information retrieval unit 54 retrieves the command file of the heat pump device 12a from the operation command information storage unit 51. In a case where there is the command file of the heat pump device which is used for operating the heat pump device 12a, this command file is read out from the operation command information storage unit 51.

The operation command information receiving unit 62 of each of the gateways 31 a to 31c compares time stamps of the retrieved command file and the command files having been received so far which are used for operating the device, and determines whether this command file has already been received. In a case where the command file retrieved from the operation command information storage unit 51 has not been received, this command file is received from the management server 11, and the command file is sent to the heat pump device. Meanwhile, whether the command file has already been received may be determined using the size of the command file, in addition to the time stamp of the command file.

The operation command information analysis unit 81 of each of the heat pump devices 12a to 12c analyzes the received command file. The operation control unit 82 sets the operation of each of the heat pump devices 12a to 12c in accordance with information of setting items of the command file.

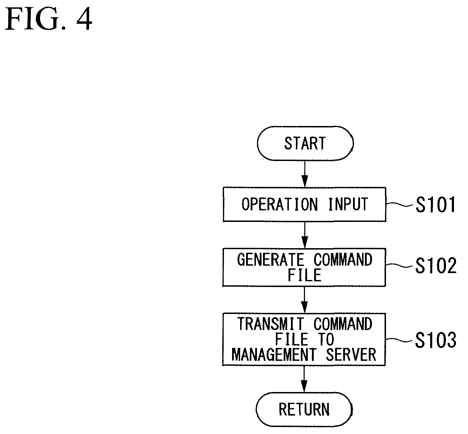

Next, the operation of the aforementioned management system 1 will be described with reference to a flow diagram. FIG. 4 is a flow diagram illustrating an operation of each of the manager terminals 13a to 13c in the management system according to the first embodiment of the present invention. In FIG. 4, in each of the manager terminals 13a to 13c, an operation input is performed by the operation input unit 71 (step S101). The operation command information generation unit 72 generates a command file for operating a target device from this operation input (step S102). The operation command information generation unit 72 transmits the command file to the management server 11 (step S103).

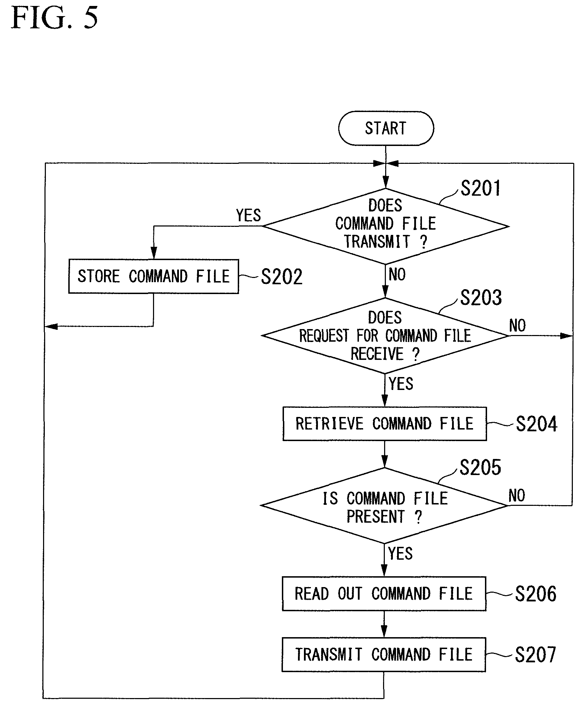

FIG. 5 is a flow diagram illustrating an operation of the management server 11 in the management system according to the first embodiment of the present invention. In FIG. 5, the management server 11 determines whether the command file from each of the manager terminals 13a to 13c has been received (step S201), and stores the command file in the operation command information storage unit 51 when the command file has been received (step S202).

The request receiving unit 53 of the management server 11 determines whether the request for the command file has been received from each of the gateways 31a to 31c of the heat pump devices 12a to 12c (step S203). When the request for operation command information has been received (step S203: Yes), the operation command information retrieval unit 54 retrieves a command file which is used for operating the device from the operation command information storage unit 51 (step S204). The operation command information retrieval unit 54 determines whether there is the command file which is used for operating the device (step S205). In a case where there is the command file which is used for operating the device (step S205: Yes), the command file is read out from the operation command information storage unit 51 (step S206). The operation command information transmission unit 52 transmits this command file to each of the gateways 31a to 31c (step S207).

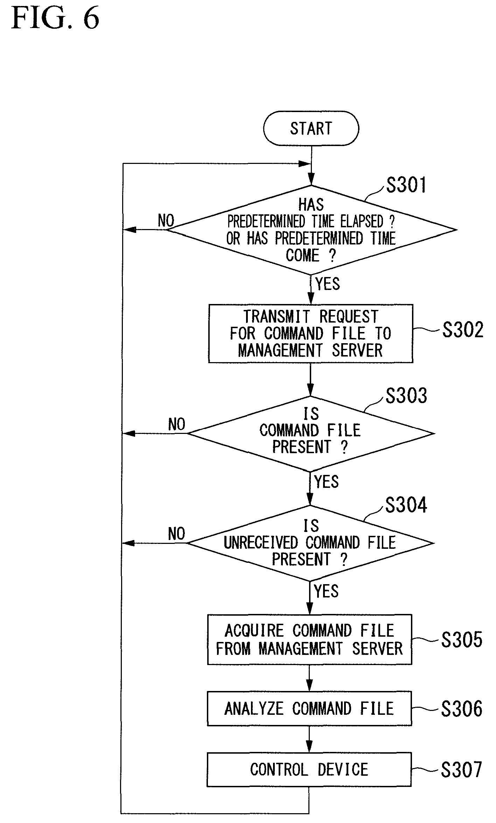

FIG. 6 is a flow diagram illustrating operations of the heat pump devices 12a to 12c and the gateways 31a to 31c in the management system according to the first embodiment of the present invention. In FIG. 6, the request transmission unit 61 determines whether a predetermined time has elapsed or a predetermined time has come (step S301), and transmits the request for the operation management information of the device to the management server 11 when a predetermined time has elapsed or a predetermined time has come (step S302).

The operation command information receiving unit 62 determines whether there is the command file which is used for operating the device (step S303). In a case where there is the command file which is used for operating the device (step S303: Yes), the operation command information receiving unit 62 compares time stamps of the file, and determines whether the command file which is used for operating the device is an unreceived latest file (step S304). In a case where the command file is an unreceived latest command file (step S304: Yes), the operation command information receiving unit 62 sends a download command to the management server 11, and acquires the command file which is used for operating the device from the management server 11 (step S305). The gateway transmits the command file to the heat pump device 12. The operation command information analysis unit 81 of each of the heat pump devices 12a to 12c analyzes the acquire command file (step S306), and the operation control unit 82 controls the operation of each of the heat pump devices 12a to 12c on the basis of the command file.

According to the above-described process, it is not necessary for a manager device to have a direct access to a managed device, and thus it is not necessary to ascertain an address of the managed device on a network at all times. Therefore, the system can be constructed at a low cost, and the versatility of the system increases. In addition, the change of design of the system is facilitated.

In addition, according to the above-described process, since the gateway has access to the management server to which a specific address is given to thereby acquire a command file and transmits the command file to the heat pump device, a manager may store the command file only to the management server 11 using the manager terminal, and it is possible to construct a system appropriate to transmit the command file to a large number of heat pump devices.

### <Second Embodiment>

Next, a second embodiment of the present invention will be described. In the above-described first embodiment, the relation between a device that performs an operation and a device which is a target for operation lies in a one-to-one relation. That is, in the first embodiment, as shown in FIG. 1, the relation between the manager terminals 13a to 13c which are devices that perform an operation and the heat pump devices 12a to 12c which are to be operated by the manager terminals 13a to 13c are determined. For example, the heat pump device 12a can be operated only by the manager terminal 13a. The heat pump device 12b can be operated only by the manager terminal 13b. The heat pump device 12c can be operated only by the manager terminal 13c. In addition thereto, the relation between a device that performs an operation and a device which is a target for operation may be a many-to-one relation, or may be a one-to-many relation.

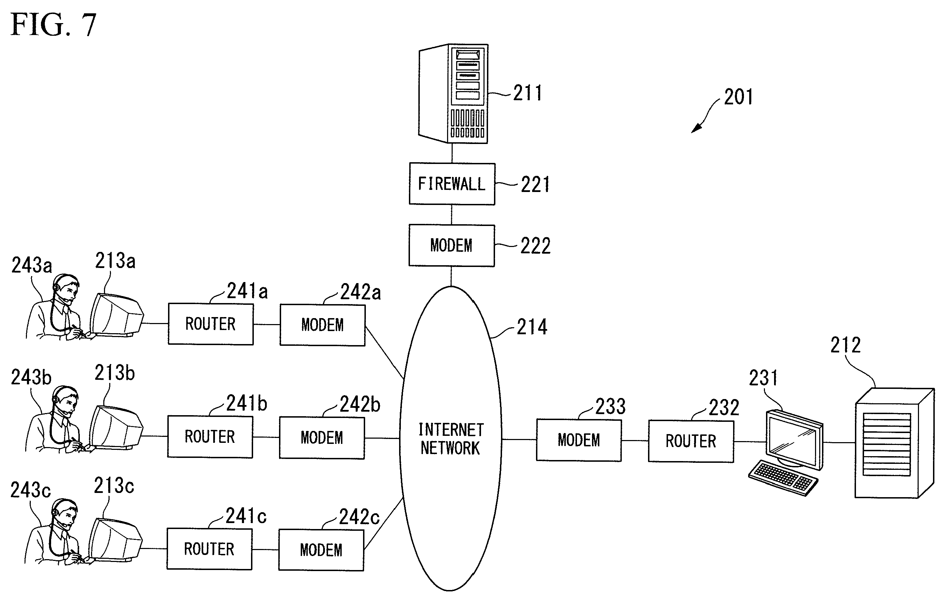

FIG. 7 is a block diagram illustrating a schematic configuration of a management system according to the second embodiment of the present invention. A management system 201 according to the second embodiment of the present invention is configured such that the relation with a device which is a target for operation is set to the many-to-one relation. In FIG. 7, a management server 211, a heat pump device 212, and manager terminals 213a to 213c are the same as the management server 11, the heat pump devices 12a to 12c, and the manager terminals 13a to 13c in the first embodiment. The number of devices is not also limited to the number shown in FIG. 7, similarly to that described with reference to FIG. 1.

The management server 211 is capable of being connected to an Internet network 214 through a firewall 221 and a modem 222. The heat pump device 212 is capable of being connected to the Internet network 214 through a gateway 231, a router 232, and a modem 233. The manager terminals 213a, 213b, and 213c are capable of being connected to the Internet network 214 through routers 241 a, 241b, and 241 c and modems 242a, 242b, and 242c, respectively.

In the second embodiment, a plurality of manager terminals 213a to 213c are provided as devices that performs an operation, whereas one heat pump device 212 is provided as a device which is a target for operation. In this example, the operation of the heat pump device 212 can be performed by any of three manager terminals 213a to 213c. For example, when the manager terminal 213a is installed to a user's house, the manager terminal 213b is installed to an agent of the device, and the manager terminal 213c is installed to a maintenance company, one heat pump device 212 can be operated and managed by a user of the device, an operator of the agent of the device, and an operator of maintenance.

In this manner, in a case where the relation between a device that performs an operation and a device which is a target for operation is set to a many-to-one relation, there is the possibility of a different setting request being performed on one heat pump device 212 from the plurality of manager terminals 213a to 213c. Consequently, the degree of priority may be assigned to command files to thereby manage the command files.

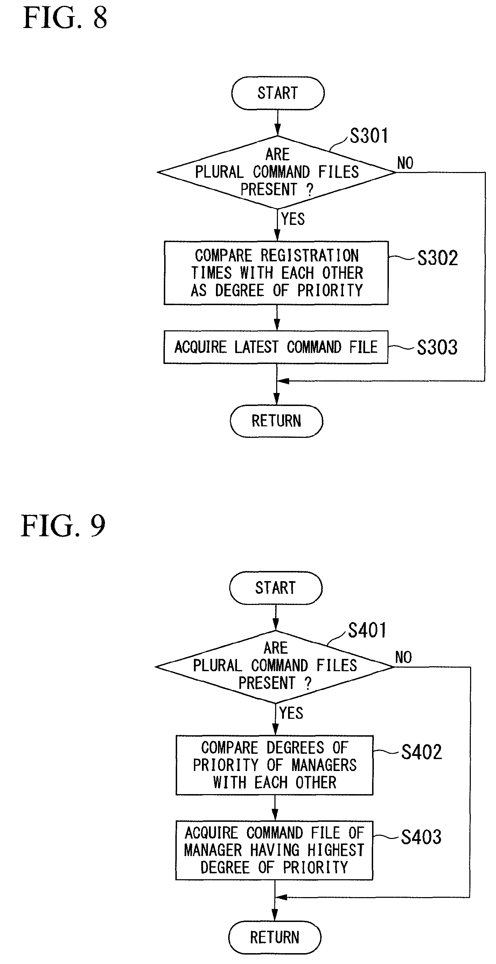

FIG. 8 is a flow diagram illustrating a process when a registration time is set to the degree of priority in the management system according to the second embodiment of the present invention. In FIG. 8, when the gateway 231 of the heat pump device 212 has access to the management server 211 to acquire a command file, it is determined whether a plurality of command files which are used for operating the device are retrieved (step S301).

In a case where the plurality of command files which are used for operating the device are retrieved, the gateway 231 compares registration times as the degree of priority (step S302), and acquires a latest command file having the highest degree of priority from the management server 211 (step S303).

For example, a description will be given by taking an example of a case where, in the management system 201 shown in FIG. 7, an operator 243a of the manager terminal 213a sets the hot water temperature of the heat pump device 212 to 60 degrees, and then an operator 243b of the manager terminal 213b sets the hot water temperature of the heat pump device 212 to 50 degrees. In this case, a command file for setting the hot water temperature of the heat pump device 212 to 60 degrees and a command file for setting the hot water temperature of the heat pump device 212 to 50 degrees are stored in the management server 211. In this case, using the process as shown in FIG. 8, the gateway 231 of the heat pump device 212 acquires a command file having a latest registration time (command file for setting the hot water temperature of the heat pump device 212, set later, to 50 degrees). Therefore, the hot water temperature of the heat pump device 212 is set to 50 degrees.

FIG. 9 is a flow diagram illustrating a process when a manager is set to the degree of priority in the management system according to the second embodiment of the present invention. In FIG. 9, when the gateway 231 of the heat pump device 212 acquires a command file, it is determined whether a plurality of command files which are used for operating the device are retrieved (step S401). The gateway 231 compares the managers as the degree of priority (step S402), and acquires a command file from a manager having the highest degree of priority, from the management server 211 (step S403).

For example, a description will be given by taking an example of a case where, in the management system 201 shown in FIG. 7, the degree of priority of the operator 243a of the manager terminal 213a is set to be higher than the degree of priority of the operator 243b of the manager terminal 213b. A case is considered in which the operator 243a of the manager terminal 213a sets the hot water temperature of the heat pump device 212 to 60 degrees, and then the operator 243b of the manager terminal 213b sets the hot water temperature of the heat pump device 212 to 50 degrees. In this case, a command file for setting the hot water temperature of the heat pump device 212 to 60 degrees and a command file for setting the hot water temperature of the heat pump device 212 to 50 degrees are stored in the management server 211. Using the process as shown in FIG. 9, the gateway 231 of the heat pump device 212 acquires a command file having a high degree of priority of a manager (command file for setting the hot water temperature of the heat pump device 212, set by the operator 243a, to 60 degrees). Therefore, the hot water temperature of the heat pump device 212 is set to 60 degrees.

Meanwhile, in a case where the relation between a device that performs an operation and a device which is a target for operation is set to a many-to-one relation, ranges or items which can be set may be determined for each manager. For example, a description will be given by taking an example of a case where the manager terminal 213a is installed to a user's house, the manager terminal 213b is installed to an agent of the device, and the manager terminal 213c is installed to a maintenance company. In this case, it is considered that overall maintenance and repair are entrusted to the maintenance company which is an expert, daily setting is entrusted to the agent, and the user controls only the start and stop of an operation. In this case, the degree of priority of the manager terminal 213c installed to the maintenance company is set to be highest, and thus all the items can be caused to be set. In addition, the manager terminal 213b installed to the agent is set to have the next degree of priority, and thus all the items except for the operation, pause, and stop can be caused to be set in the manager terminal 213b.

In the manager terminal 213a installed to the user's house, the degree of priority is set to be lowest, and thus only the operation, pause, and stop can be caused to be performed. In addition thereto, regarding the allocation of the degree of priority or the allocation of items, various types of combinations are considered.

### <Third Embodiment>

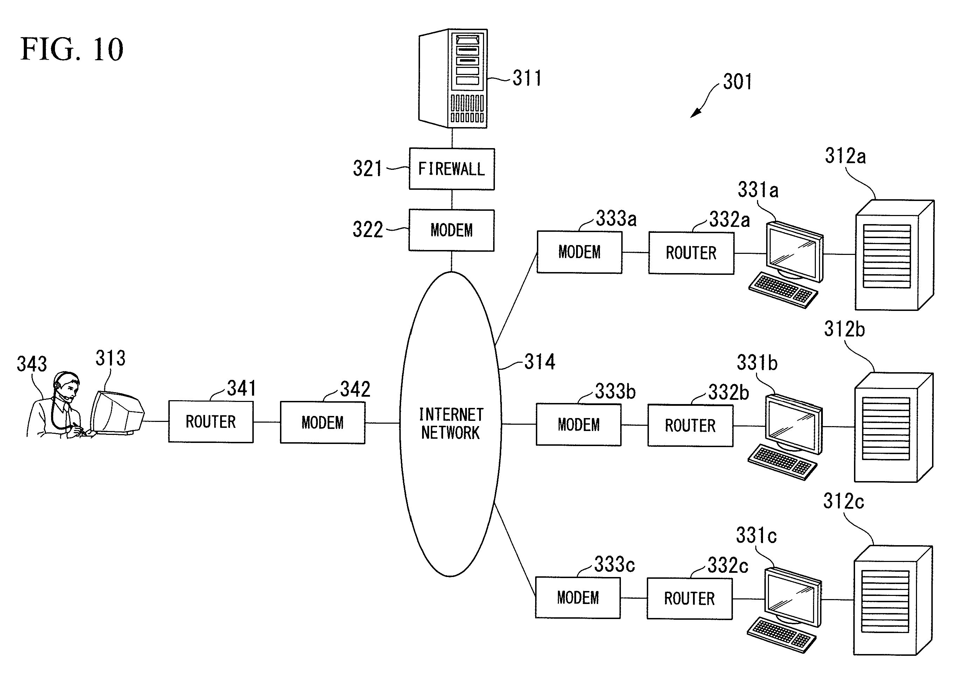

FIG. 10 is a block diagram illustrating a schematic configuration of a management system according to a third embodiment of the present invention. A management system 301 according to the third embodiment of the present invention is configured such that the relation with a device which is a target for operation is set to a one-to-many relation. In FIG. 10, a management server 311, heat pump devices 312a to 312c, and a manager terminal 313 are the same as the management server 11, the heat pump devices 12a to 12c, and the manager terminals 13a to 13c in the first embodiment. The number of devices is not also limited to the number shown in FIG. 10, similarly to that described with reference to FIG. 1.

The management server 311 is capable of being connected to an Internet network 314 through a firewall 321 and a modem 322. The heat pump devices 312a, 312b, and 312c are capable of being connected to the Internet network 314 through gateways 331a, 331b, and 331c, routers 332a, 332b, and 332c, and modems 333a, 333b, and 333c, respectively. The manager terminal 313 is capable of being connected to the Internet network 314 through a router 341 and a modem 342.

In the third embodiment, the device that performs an operation is one manager terminal 313, whereas three heat pump devices 312a to 312c are provided as the devices which are targets for operation. In this example, three heat pump devices 312a to 312c can all be operated by one manager terminal 313. For example, when the manager terminal 313 is installed to the agent of the device, a plurality of heat pump devices 312a to 312c present in a user's house can be collectively managed by an operator of the agent of the device. In addition, for example, in a case where one user possesses the plurality of heat pump devices 312a to 312c, the installation of the manager terminal 313 to the management room of the user can cause the plurality of heat pump devices 312a to 312c possessed by the user to be collectively managed by an operator of the management room.

In a case where the relation between a device that performs an operation and a device which is a target for operation is set to a one-to-many relation, an operator 343 of the manager terminal 313 has to operate the plurality of heat pump devices 312a to 312c.

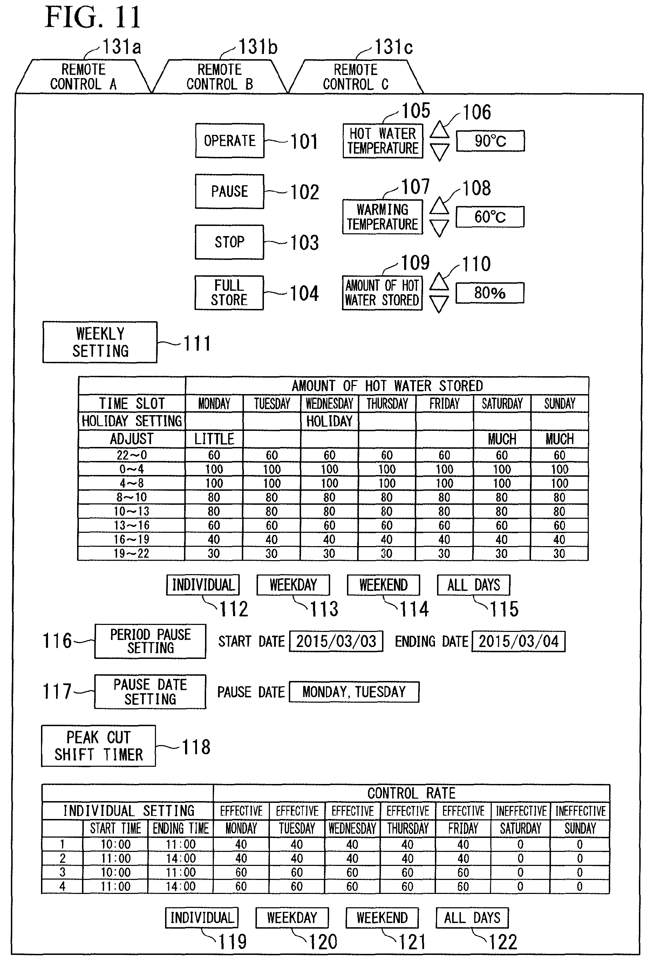

FIG. 11 is a diagram illustrating an example of an operation screen in the management system according to the third embodiment of the present invention. Meanwhile, in FIG. 11, the same buttons as those on the operation screen shown in FIG. 3 are denoted by the same reference numerals. In the present embodiment, as shown in FIG. 11, operations for a plurality of devices can be switched for each page, on the operation screen of the manager terminal 313, using tags 131 a, 131b, and 131 c. In this case, operation items of a device group consisting of the plurality of devices can be unified into one command file. In a case where the operation items of the device group consisting of the plurality of devices are included in one command file, the gateways 331a to 331c receives command files including the operation items of the device group consisting of the plurality of devices, determines items which are targets for operating the device from these command files, and controls each of the heat pump devices 312a to 312c.

Meanwhile, a program for realizing all or some of functions of the management system 1 is recorded in a computer readable recording medium, and thus a process of each unit may be performed by causing a computer system to read and execute the program recorded in this recording medium. Meanwhile, the term "computer system" as used herein is assumed to include an OS or hardware such as peripheral devices.

In addition, the "computer system" is also assumed to include a homepage providing environment (or a display environment) in a case where a WWW system is used.

In addition, the term "computer readable recording medium" refers to a flexible disk, a magneto-optic disc, a ROM, a portable medium such as a CD-ROM, and a storage device such as a hard disk built into the computer system. Further, the "computer readable recording medium" is assumed to include recording mediums that dynamically hold a program during a short period of time like networks such as the Internet or communication lines when a program is transmitted through communication lines such as a telephone line, and recording mediums that hold a program for a certain period of time like a volatile memory inside a computer system serving as a server or a client in that case. In addition the above-mentioned program may be a program which is used for realizing a portion of the aforementioned functions, and may be a program which is capable of realizing the aforementioned functions by a combination of programs previously recorded in the computer system.

According to the management system and the management method described above, it is not necessary for a manager device to have a direct access to a managed device, and thus it is not necessary to ascertain an address of the managed device on a network at all times. Therefore, the system can be constructed at a low cost, and the versatility of the system increases. In addition, the change of design of the system is facilitated.

## Claims

1. A management system comprising:
a management device comprising:
an operation command information storage unit that receives and stores operation command information from a manager terminal, and
an operation command information transmission unit that transmits the operation command information on the basis of a request for the operation command information; and
a managed device comprising an operation control unit that performs operation control of the device on the basis of the operation command information received from the management device.

2. The management system according to claim 1, further comprising:
a relay device that transmits the request to the management device; and
an operation command relay unit that receives the operation command information from the management device and transmits the received information to the managed device.

3. The management system according to claim 2, wherein the relay device transmits the request to the management device periodically or at a predetermined time.

4. The management system according to any one of claims 1 to 3, wherein the operation command information transmission unit of the management device transmits operation command information having a highest degree of priority among items of the operation command information for the managed device.

5. The management system according to claim 4, wherein a magnitude of the degree of priority is determined on the basis of a registration time of the operation command information.

6. The management system according to claim 4, wherein a magnitude of the degree of priority is determined on the basis of a manager having the operation command information registered therewith.

7. The management system according to any one of claims 1 to 6, wherein the managed device is constituted by a plurality of devices which are targets for management,
the operation command information is operation command information of each of the plurality of devices, and
the operation control unit of each of the plurality of devices which are targets for management acquires an operation command corresponding to the device on the basis of the operation command information and performs operation control.

8. A management method in a management system provided with a management device and a managed device, the method comprising:
causing an operation command information storage unit of the management device to receive and store operation command information from a manager terminal;
causing an operation command information transmission unit of the management device to transmit the operation command information on the basis of a request for the operation command information; and
causing an operation control unit of the managed device to perform operation control of the device on the basis of the operation command information received from the management device.
